# EUROPÄISCHE PATENTANMELDUNG

(11) **EP 1 715 447 A2**
(43) Veröffentlichungstag der Anmeldung: **25.10.2006**
(21) Anmeldenummer: 06008177.5
(22) Anmeldetag: 20.04.2006
(51) Int. Cl.: G06K 19/077

(54) **Verfahren und Vorrichtung zur elektronischer Kennzeichnung von Verpackungen sowie Verpackung**

(30) Priorität: 20.04.2005 DE 102005018516; 23.04.2005 DE 102005019079; 30.06.2005 DE 102005031092; 14.06.2005 DE 102005027797
(71) Anmelder: Peppler, Heinrich Karl, 97318 Kitzingen (DE)
(72) Erfinder: Peppler, Heinrich Karl, 97318 Kitzingen (DE)
(74) Vertreter: Castell, Klaus

(57) **Zusammenfassung**

Bei einem Verfahren zum Versehen einer Vielzahl von Stanzprodukten jeweils mit mindestens einem Transponder wird der Transponder auf einem Endiosträger bereitgestellt, der an die Stanzprodukte bzw. an Vorstufen der Stanzprodukte appliziert wird. Hierdurch arbeitet das Verfahren besonders kostengünstig.

## Beschreibung

Die Erfindung betrifft ein Stanzprodukt, welches mit wenigstens einem Transponder versehen ist, eine Vielzahl gleichartiger, derartiger Stanzprodukte sowie ein Verfahren zum Versehen einer Vielzahl von Stanzprodukten mit jeweils zumindest einem Transponder.

Derartiger Transponder sind beispielsweise aus der EP 0 615 285 A2 und aus der US 5,786,626 bekannt. Diese können, wie beispielsweise in der US 5,884,451, der US 6,121,880 und in der US 6,249,226 B1 dargestellt, in Etiketten integriert werden, welche dann auf Verpackungen, Papieren oder Waren angebracht werden können. Derartige Etiketten können dann, wie beispielsweise in der US 6,121,880 dargestellt, unmittelbar an die Waren angebracht werden. Anderseits können auch Umverpackungen, wie dieses in der US 5,884,451 bzw. in der US 6,249,226 B1 dargestellt ist, entsprechend mit derartigen Etiketten versehen werden.

Darüber hinaus ist es bekannt, derartige Transponder in bzw. an wiederverwendbaren Beförderungsmitteln, wie beispielsweise Behältern, Containern, Troley-Wagen oder Klappkisten, zu befestigen, wie z.B. in der DE 199 50 532 A1, der FR 2 697 801 A1 und der DE 44 39 914 A1 offenbart. Ebenso ist es aus der DE 195 20 131 C1, aus der EP 0 984 380 A2 und aus der EP 1 189 106 A2 bekannt, derartige Transponder an der Ware selbst anzubringen. Dieses kann einerseits in entsprechenden Ausnehmungen der mit dem jeweiligen Transponder zu versehenen Gegenstände oder durch das Anbringen entsprechender Etiketten geschehen.

Auch ist es bekannt, wiederverwendbare Beförderungsmittel aus Papier, Pappe bzw. Karton mit derartigen Transpondern zu versehen. Hierbei können die Transponder beispielsweise in Ausnehmungen in einer Wellpappenstruktur vorgesehen sein, bei welcher die Ausnehmungen von überlappenden Laschen der Wellpappenstruktur abgedeckt sind, wie dieses beispielhaft in der EP 0 861 788 B 1 offenbart ist. Hierbei ist die Markierung derartiger Beförderungsmittel an sich bereits aus der US 2,111,382, der US 2,605,893 und der US 1,850,714 mit konventionellen Methoden, in denen beispielsweise Bierdeckel in Ausnehmungen derartiger Wellpappenstrukturen eingebracht werden, bekannt.

Des Weiteren ist es bekannt, derartige Transponder innerhalb einer Wellpappe anzuordnen, wie dieses beispielsweise die EP 1 284 320 A2, die WO 99/31626 A1 sowie die WO 01/03058 A1 offenbaren. Auf diese Weise sind die Transponder besonders betriebssicher vor Manipulationen bzw. unbeabsichtigter Beschädigung geschützt. Darüber hinaus offenbaren die DE 196 01 358 A1 und die WO 99/31626 A1, dass derartiger Transponder auch in eine Pulpe zur Herstellung von Papier bzw. Pappe eingebracht und mithin in derartige Materialien integriert werden können.

Bei all diesen Anordnungen werden hochwertige, wiederverwendbare Beförderungsmittel bzw. äußerst hochwertige Papiere hergestellt, wobei auch die hierzu benötigten Anlagen verhältnismäßig komplex und somit kostenintensiv sind.

Es ist Aufgabe vorliegender Erfindung, gattungsgemäße Stanzprodukte, eine Vielzahl gleichartiger Stanzprodukte sowie ein Verfahren zum Versehen einer Vielzahl von Stanzprodukten mit jeweils zumindest einem Transponder bereitzustellen, bei welchen die Herstellung erleichtert ist, sodass auch entsprechende Herstellungsanlagen entsprechend kostengünstig sind und somit auch niederpreisige Stanzprodukte hergestellt werden können.

Als Lösung wird einerseits ein Verfahren zum Versehen einer Vielzahl von Stanzprodukten mit jeweils zumindest einem Transponder vorgeschlagen, welches sich dadurch auszeichnet, dass die Transponder irregulär in Bezug auf den Stanzvorgang an die Stanzprodukte bzw. an Vorstufen der Stanzprodukte oder an einem Endlosträger, der auf die Stanzprodukte bzw. auf Vorstufen der Stanzprodukte appliziert wird, appliziert werden.

Ebenso wird als Lösung ein Verfahren zum Versehen einer Vielzahl von Stanzprodukten mit jeweils mindestens einem Transponder vorgeschlagen, welches sich dadurch auszeichnet, dass der Transponder auf einem Endlosträger bereitgestellt wird, der an die Stanzprodukte bzw. an Vorstufen der Stanzprodukte appliziert wird.

In Abweichung vom Stand der Technik geht die Erfindung somit von der Grunderkenntnis aus, dass nicht notwendigerweise genau ein Transponder exakt positioniert auf einem Stanzprodukt vorgesehen sein muss. Vielmehr scheint es ausreichend, wenn lediglich sichergestellt ist, dass zumindest ein Transponder auf einem jeweiligem Stanzprodukt irgendwo zu finden ist. Auf diese Weise kann auf aufwendige Regel- und Kontrollmechanismen, mit welchen die jeweiligen Transponder exakt auf den jeweiligen Stanzprodukten positioniert werden, verzichtet werden. Auch können dann notwendige Justierarbeiten, welche bei einem Wechsel der Stanzprodukte auftreten, unterbleiben bzw. auf ein Minimum reduziert werden.

Dementsprechend schlägt die Erfindung als weitere Lösung auch eine Vielzahl gleichartiger Stanzprodukte, die jeweils mit wenigstens einem Transponder versehen sind, vor, welche sich dadurch auszeichnet, dass die Transponder dieser Vielzahl gleichartiger Stanzprodukte irregulär auf den Stanzprodukten positioniert sind.

Im vorliegenden Zusammenhang bezeichnet der Begriff "irregulär", dass die entsprechende Position der Transponder zumindest in einer Richtung, welche vorzugsweise die Maschinenlaufrichtung beim Durchlaufen der Herstellungsanlage ist, im Rahmen der Produktions- bzw. Messtoleranzen gleichförmig statistisch auf den Stanzprodukten verteilt sind. Insofern weicht vorliegende Erfindung schon vom Grundsatz her vom Gegenstand der WO 01/030581 A1 ab, bei welcher die jeweiligen Transponder gezielt, aber in unterschiedlichen Positionen, positioniert werden. Selbiges gilt auch für auf Etiketten hefindliche Transponder, da je Etikett jeweils genau ein Transponder vorgesehen ist und da auch die Etiketten jeweils genau positioniert werden.

Stanzprodukte der gattungsgemäßen Art aber auch der erfindungsgemäßen Art werden, wie beispielsweise in der EP 1 284 320 A2 bzw. der WO 99/31626 A1 offenbart, aus entlang einer Maschinenrichtung laufenden Materialbahnen, welche entsprechende Vorstufen der Stanzprodukte darstellen, gewonnen, indem diese Materialbahnen entsprechenden Stanzvorrichtungen zugeführt werden, sodass sequentiell die jeweiligen Stanzprodukte aus diesen Materialbahnen ausgestanzt werden können. Hierbei spielen im vorliegenden Zusammenhang die Art des Stanzvorganges bzw. das Verfahren, mit welchem das Stanzprodukt aus der Materialbahn herausgetrennt wird, keine Rolle. Statt einem herkömmlichen Stanzen können auch andere Trennvorgänge, wie beispielsweise Laserschneiden, Ultraschallschneiden bzw. Sägeverfahren, dementsprechend zur Anwendung kommen. Insbesondere bei hohem Materialdurchsatz sind jedoch konventionelle Stanzverfahren von Vorteil, bei welchem wenigstens ein Trennmesser oder ähnliches die Materialbahn im Wesentlichen senkrecht zur Materialbahn gerichtet durchtrennt, wobei dieses Trennmesser an einem senkrecht zur Materialbahn auf und ab bewegten Stempel oder an einer umlaufenden Walze angeordnet sein kann. Es versteht sich, dass neben derartigen Trennvorgängen auch Prägungen oder ähnliches an der Materialbahn bzw. an den Stanzprodukten vorgenommen werden können, um beispielsweise Faltrillungen oder Perforationen bereitzustellen.

Entsprechend der zweiten der vorgenannten Lösungen sollen die Transponder auf einem Endlosträger bereitgestellt werden. Da derartige Endlosträger unabhängig von den jeweiligen Stanzprodukten gefertigt werden, ergibt sich schon aus diesem Grunde eine irreguläre Positionierung der Transponder, wenn der Endlosträger appliziert wird.

Entsprechend der Verwendung eines derartigen Endlosträgers wird als weitere Lösung ein Stanzprodukt vorgeschlagen, welches mit wenigstens einem Transponder versehen ist und sich dadurch auszeichnet, dass der Transponder auf einem Träger angeordnet ist, der kleiner als das Stanzprodukt ist und an zwei Seiten bis zu einer Umrandung des Stanzproduktes reicht. Bei diesem Träger handelt es sich dann um den mit ausgestanztem Teil des Endlosträgers, wenn dieser an die Stanzprodukte bzw. an Vorstufen der Stanzprodukte appliziert ist.

Der Vorteil der Verwendung eines derartigen Endlosträgers liegt insbesondere auch darin, dass der Umgang mit endlosen Bändern bei gattungsgemäßen bzw. erfindungsgemäßen Herstellungsverfahren an sich durch die Verwendung von Aufreißfäden oder ähnlichem bekannt ist, sodass der maschinelle Aufwand, um die erfindungsgemäßen Endlosträger auf die Stanzprodukte bzw. auf deren Vorstufen zu applizieren, auf ein Minimum beschränkt werden kann. Dementsprechend ist es vorteilhaft, wenn als Träger beispielsweise ein entsprechendes Aufreißband zur Anwendung kommt. Auch kann als Träger ein Klebeband zur Anwendung kommen, auf welchem die Transponder angebracht sind. Dieses Klebeband kann, je nach konkreter Ausführungsform, innerhalb des Stanzproduktes aber auch außerhalb des Stanzproduktes angebracht werden, wobei es insbesondere bei letzterem auch unabhängig von den übrigen Merkmalen vorliegender Erfindung vorteilhaft ist, wenn der Transponder auf das Klebeband aufgedruckt bzw. in ein Druckbild auf dem Klebeband integriert ist, da hierdurch die Position des Transponders leicht auffindbar ist, obgleich sie durch das Druckbild für Dritte kaschiert ist.

Die vorstehend vorgeschlagenen Stanzprodukte, bei welchen der Transponder auf einem Träger angeordnet ist, der kleiner als das Stanzprodukt ist und an zwei Seiten bis zu einer Umrandung des Stanzproduktes reicht, unterscheiden sich im Übrigen erheblich von den Anordnungen, bei welchen Etiketten zur Anwendung kommen, wie diese beispielsweise in der EP 1 189 106 A2, der US 5,884,451, der US 6,121,880 und der US 6,249,226 B1 offenbart sind, bei welchen die Etiketten entgegen der vorliegenden Erfindung exakt positioniert werden und an keiner Stelle den Rand des jeweiligen Stanzproduktes erreichen.

Als weitere Lösung wird erfindungsgemäß ein Stanzprodukt vorgeschlagen, welches mit wenigstens einem Transponder versehen ist und welches sich dadurch auszeichnet, dass wenigstens ein weiterer Transponder auf dem Stanzprodukt angeordnet ist. Eine derartige Anordnung gewährleistet betriebssicher und ohne größeren Aufwand bei einer irregulären Applikation der Transponder auf dem jeweiligen Stanzprodukt, dass bei einer derartigen irregulären Applikation zumindest ein Transponder auf dem Stanzprodukt zu finden ist. Hierbei können die Transponder vorzugsweise entsprechend der zuvor dargestellten Lösung auf einem Träger angeordnet sein, wobei je nach konkreter Ausgestaltung der Erfindung die Transponder auf getrennten Trägern oder auf einem gemeinsamen Träger angeordnet sein können.

Vorzugsweise ist der weitere Transponder inaktiviert. Auf diese Weise kann auf dem Stanzprodukt lediglich ein aktiver Transponder verbleiben, sodass für das weitere Händling keine separaten Maßnahmen oder Protokolle notwendig sind und das Stanzprodukt mit den im Stand der Technik bereits bekannten Verfahren hinsichtlich seines Transponders verwendet werden kann. Vorzugsweise erfolgt das Inaktivieren nach dem Aufbringen der Transponder auf die jeweilige Materialbahn bzw. nach dem Stanzen.

Manipulationen lassen sich vermeiden, wenn der weitere Transponder irreversibel inaktiviert ist. Auf diese Weise ist sichergestellt, dass ein auf diese Weise hergestelltes Stanzprodukt einem auf herkömmliche Weise hergestellten Stanzprodukt in seinem Verhalten hinsichtlich des Transponders entspricht. Eine irreversible Inaktivierung kann beispielsweise durch einen elektromagnetischen Impuls oder eine sonstige Überspannung erzielt werden, welche auf den Transponder gezielt einwirken.

Auch durch geeignete Softwaremaßnamen bzw. Programmierung des jeweiligen Transponders kann eine Inaktivierung bzw. eine irreversible Inaktivierung erfolgen.

Alternativ kann der weitere Transponder auch reversibel inaktiviert sein, sodass dieser bei Bedarf, beispielsweise bei einem Ausfall des ersten Transponders, wieder aktiviert werden kann. Des Weiteren ist es auch möglich, von Vornherein mehrere Transponder an dem Stanzprodukt in aktiver Form zu belassen, um beispielsweise die Lesbarkeit durch eine Redundanz an Transpondern zu erhöhen.

Vorzugsweise ist eine Baugruppe des Transponders aufgedruckt, was insbesondere für die Antenne des Transponders gilt, wie dieses in der EP 0 615 285 A2 offenbart ist. Ein derartiger Druck ist insbesondere im Zusammenspiel mit einer irregulären Positionierung der Transponder von überraschend großem Vorteil, da bei einer derartigen Ausgestaltung für den Druck ein regelmäßig arbeitendes Druckwerk, dessen Druckfrequenz unabhängig von der Anordnung der Stanzprodukte gewählt ist, zur Anwendung kommen kann. Auf diese Weise können die Transponder entweder unmittelbar an den Stanzprodukten bzw. an Vorstufen der Stanzprodukte oder an den Endlosträger ohne weiteres appliziert werden.

Dementsprechend ist auch eine Verfahrensführung von Vorteil, bei welcher zumindest eine Baugruppe der Transponder in flüssiger Form dementsprechend angebracht wird.

Selbiges gilt darüber hinaus auch für andere Möglichkeiten, bei welchen zumindest eine Baugruppe der Transponder auf die Stanzprodukte bzw. auf Vorstufen der Stanzprodukte oder auf einen Endlosträger in flüssiger Form angebracht werden kann. Eine derartige Anbringungsweise ist insbesondere auch äußerst kostengünstig, sodass sie insbesondere mit Wegwerfverpackungen in unerwarteter Weise vorteilhaft zur Anwendung kommen kann.

Alternativ zu einem Druck kann zumindest eine Baugruppe des Transponders auf die Stanzprodukte bzw. auf Vorstufen der Stanzprodukte oder auf einen Endlosträger angespritzt werden. Dieses kann einerseits durch einfaches Aufspritzen geschehen. Ebenso ist es denkbar, dass hierzu eine Paste oder Tinte in das jeweilige Stanzprodukt bzw. dessen Vorstufe oder in den Endlosträger injiziert wird. Eine derartige Injektion einer Transponderbaugruppe, insbesondere der Antenne eines Transponders, ist auch unabhängig von den übrigen Merkmalen vorliegender Erfindung für Transponder vorteilhaft, da hierdurch in einem Verfahrensschritt eine besonders innige Verbindung mit dem Material, welches den Transponder schließlich tragen soll, gewährleistet wird und darüber hinaus der Transponder bzw. diese Baugruppe äußerst zuverlässig gegen äußere Einflüsse geschützt werden kann.

Für einen Druck bzw. das Anspritzen, Aufspritzen oder Injizieren können insbesondere leitfähige Polymere und/oder metallische Tinten zur Anwendung kommen, welche nach dem Anbringen in flüssiger Form sich in irgendeiner Weise stabilisieren, beispielsweise aushärten, und leitfähige Bereiche hinterlassen.

Es versteht sich, dass ein Anbringen einer Baugruppe der Transponder in flüssiger Form auf Wegwerfprodukte, ein Anspritzen, insbesondere ein Aufspritzen, ein Einspritzen oder ein Injizieren, einer Baugruppe des Transponders und/oder die Verwendung einer Polymere enthaltenen Paste hzw. einer metallischen Tinte auch unabhängig von den übrigen Merkmalen vorliegender Erfindung zum Anbringen eines Transponders an einem beliebigen Körper, insbesondere an einem Stanzkörper, vorzugsweise aus Papier, vorteilhaft ist, um in großer Stückzahl mit verhältnismäßig geringem Aufwand Transponder betriebssicher anzubringen.

Es versteht sich, dass statt der Antenne auch der Chip aufgedruckt bzw. injiziert oder sonst wie in flüssiger Form appliziert sein kann. Hierbei ist es einerseits denkbar, dass mit einer derartigen Applikation der gesamte Chip auf das Stanzprodukt bzw. in das Stanzprodukt gebracht wird. Andererseits ist es auch denkbar, dass sogar die logischen Schaltungen des Chips entsprechend bereitgestellt werden, was insbesondere auf bzw. durch sehr glatte Oberflächen, wie beispielsweise Kunststoffschichten eines Endlosträgers, ohne weiteres möglich ist.

Bei Injektionsvorgängen kann zumindest eine Schicht oder Lage des Stanzproduktes durchdrungen werden, wie dieses beispielsweise bei Tättowiervorgängen oder Ähnlichem der Fall ist. Je nach konkreter Ausführungsform verbleiben nach einem derartigen Durchdringungsprozess wenigstens mikroskopische Spuren hiervon, wobei es andererseits auch denkbar ist, dass während der Injektion Hohlräume in dem Stanzprodukt geschaffen werden, indem dem Stanzprodukt entsprechend Material entnommen wird, so dass der Transponder dann anschließend in einen derartigen Hohlraum eingeschoben bzw. abgelegt werden kann. Es versteht sich, dass die Injektion eines Transponders, welche je nach konkreter Ausgestaltung auch dem Produkt im Nachhinein noch anzusehen ist, auch unabhängig von den übrigen Merkmalen vorliegender Erfindung vorteilhaft ist, da eine derartige Injektion letztlich zu einem beliebigen Zeitpunkt an dem Stanzprodukt vorgenommen werden kann und, da sich nach der Injektion der Transponder innerhalb des Stanzproduktes befindet, der Transponder trotz allem durch das Stanzprodukt geschützt ist. Eine derartige Injektion kann einerseits ungetaktet in Bezug auf die Stanzprodukte erfolgen. Andererseits ist es auch ohne weiteres möglich, eine derartige Injektion entsprechend der Stanzprodukte zu takten bzw. eine derartige Injektion an einer vorbestimmten Stelle der Stanzprodukte durchzuführen. Insbesondere kann eine derartige Injektion nahezu an jeder beliebigen Stelle des Fertigungsprozesses durchgeführt werden, beispielsweise bei Stanzprodukten, die als Verpackung dienen, erst dann, wenn ein Produkt in die Verpackung eingelegt wird.

Insbesondere bei letzterem kann eine derartige Injektion beispielsweise längst in die Verpackung erfolgen, was insbesondere bei Wellpappen oder ähnlichen Anordnung, welche regelmäßig angeordnete Hohlräume aufweisen, ohne weiteres längst dieser Hohlräume bzw. Wellenberge oder -täler erfolgen kann. Bei derartigen Stanzprodukten braucht der Transponder lediglich in die entsprechenden Hohlräume eingeschoben zu werden, wobei dieses besonders einfach ist, wenn sich diese Hohlräume bis zu einem Rand des Stanzproduktes öffnen, was beispielsweise bei Wellpappe zumindest an zwei Rändern des Stanzproduktes regelmäßig der Fall ist.

Andererseits kann beispielsweise bei dickeren Kartonagen oder ähnlichen Stanzprodukten ein derartiger Hohlraum erst während der Injektion bereitgestellt werden, was beispielsweise durch ein Verdrängen von Material des Stanzproduktes an dieser Stelle bzw. durch eine entsprechende Materialentnahme erfolgen kann.

In der Regel wird man dem Endprodukt den Injektionsvorgang ansehen, sei es beispielsweise durch entsprechende Spuren, wie Schleifspuren oder feine Öffnungen für den Injektor, oder sei es, dass der Transponder mit dem Stanzprodukt in einer Weise verbunden ist, die ausschließlich durch ein nachträgliches Injizieren bedingt sein kann. Letzteres kann beispielsweise dadurch bedingt sein, dass der Transponder mit zumindest zwei Komponenten des Stanzproduktes verbunden ist, beispielsweise mit einer Welle und mit einem Deckblatt, indem er beispielsweise mit beiden Komponenten verklebt ist, so dass unmittelbar ersichtlich ist, dass der Transponder nachträglich in die Welle eingebracht wurde. Ebenso ist es denkbar, dass der Transponder unter einer Vorspannung des Stanzproduktes mit diesem verbunden ist, was beispielsweise dadurch realisiert werden kann, dass der Transponder in einen Hohlraum eingeschoben wird, der kleiner ist als der Transponder, so dass sich der Hohlraum entsprechend weiten muss, um diesen aufzunehmen. Insoweit unterscheidet sich diese Befestigung derartiger Transponder in der Materialbahn von der Befestigung nach dem Stand der Technik, wie beispielsweise nach der WO 2004/029872 A1, bei welcher der Transponder entweder lediglich an einer Komponente, nämlich dem Deckblatt einer Wellpappe, befestigt oder innerhalb mehrerer Hohlräume angebracht ist. Auch ein Befestigen derartiger Transponder unter Eigenspannung der Materialbahn ist dem Stand der Technik nicht zu entnehmen, so dass diese Befestigungsmethoden auch unabhängig von den übrigen Merkmalen vorliegender Erfindung für das Befestigen eines Transponders in einer Materialbahn vorteilhaft sind.

Handelt es sich bei dem Stanzprodukt um eine Wegwerfverpackung, so kann der Transponder einen Sensor zum Erfassen von Umgebungsdaten zur Wegwerfverpackung umfassen. Eine derartige Lösung ist auch unabhängig von den übrigen Merkmalen vorliegender Erfindung, insbesondere in Abgrenzung zu der DE 199 50 532 A1 vorteilhaft, welche auf wiederverwendbare Beförderungsmittel gerichtet ist, um auch bei Wegwerfverpackungen die Umgebung eines Produktes, insbesondere wenn dieses unter bestimmten Umgebungsbedingungen aufbewahrt werden muss, überprüfen zu können. Dieses erfolgt in völliger Abkehr vom bisherigen Stand der Technik, nach welchem Transponder mit einem Sensor lediglich bei hochpreisigen, wiederverwendbaren Behältnissen zur Anwendung kommen.

Besonders vorteilhaft ist es, wenn als derartige Sensoren Einmalsensoren bzw. irreversible Sensoren zur Anwendung kommen, da diese in der Regel einen sehr geringen Stromverbrauch haben und äußerst klein bauen. Mithin sind derartige Sensoren besonders für ein Zusammenspiel mit Transpondern, welche in der Regel nicht über einen Energiespeicher bzw. nicht über einen sehr großen Energievorrat verfügen, geeignet. Beispielsweise können Widerstände in Form von Polymeren vorgesehen sein, die bei bestimmten Temperaturen einen Phasenübergang aufweisen und einen signifikanten Widerstandssprung bedingen, der dann über den Transponder in geeigneter Weise abgefragt werden kann. Kumulativ bzw. alternativ zu derartigen irreversiblen Sensoren können insbesondere binäre Sensoren zur Anwendung kommen, da diese lediglich eine sehr einfache Ansteuerungslogik benötigen, so dass die Transponder sehr klein und unkompliziert bauen können. Insbesondere können derartige irreversible bzw. binäre Sensoren wegen ihres einfachen Aufbaus auch mit Druckverfahren oder auf ähnliche Weise appliziert werden. Derartige binäre Sensoren und/oder irreversible Sensoren bzw. Einmalsensoren sind auch unabhängig von den übrigen Merkmalen vorliegender Erfindung vorteilhaft.

In einer bevorzugten Ausgestaltung vorliegender Erfindung wird der Transponder mit der Taktung der Stanzprodukte, allerdings irregulär, an den Stanzprodukten bzw. an den Vorstufen der Stanzprodukte angebracht. Dieses bedeutet, dass eine Synchronisation zwischen Stanzung und dem Anbringen der Transponder nicht erfolgt, auch wenn dieselbe Taktung vorliegt. Auf diese Weise kann die Gesamtanlage, auch wenn eine identische Taktung gewählt wird, verhältnismäßig einfach und somit kostengünstig aufgebaut sein. Insoweit bleiben trotz vergleichbarer Taktung zwischen Transponder und Stanzprodukt Abweichung von dieser Taktung, wie sie beispielsweise durch unterschiedliches Dehnverhalten der gestanzten Materialbahn und des Endlosträgers aber auch durch Toleranzen der Rollendurchmesser oder ähnliches bedingt sind, erfindungsgemäß unberücksichtig.

Es versteht sich, dass jedoch auch die Transponder unabhängig von der Taktung der Stanzprodukte an den Stanzprodukten bzw. an den Vorstufen der Stanzprodukte angebracht werden können. Insoweit braucht die Taktung der Transponder bzw. ein einmal gewähltes, Transponder tragendes Endlosband bei einem Wechsel der herzustellenden Stanzprodukte nicht ausgetauscht werden.

Je nach konkreter Ausgestaltung kann vorzugsweise das Stanzprodukte eine Umverpackung sein, innerhalb welcher der Transponder angeordnet ist. Vorzugsweise ist der Transponder dann auf einer Innenseite der Umverpackung angeordnet, sodass die Gefahr von Manipulationen auf ein Minimum reduziert werden kann. Alternativ kann der Transponder beidseits vom Material des Stanzproduktes bedeckt sein, wobei dieses beispielsweise durch Anordnen des Transponders unterhalb einer Lasche des Stanzproduktes, durch Injizieren des Transponders in das Stanzprodukt oder durch Applizieren des Transponders beim Zusammenfügen der Materialien des Stanzproduktes erfolgen kann.

In einer weiteren bevorzugten Ausführungsform ist der Transponder von dem Träger bedeckt. Hierdurch lässt sich der Transponder verhältnismäßig einfach gegen Manipulationen bzw. gegen eine Beschädigung von außen schützen.

Der Träger kann in einer bevorzugten Ausgestaltung bandartig ausgebildet sein, was insbesondere ein Anbringen der Transponder auf dem Träger zur Bereitstellung eines vorstehend bereits beschriebenen Endlosträgers erleichtert. In einer alternativen Ausführungsform ist der Träger ein Schlauch, sodass der Transponder beidseits von Trägermaterial umgeben ist. Auf diese Weise kann der Transponder durch den Träger einfach und betriebssicher allseits gegen äußere Einflüsse geschützt werden, insbesondere wenn er dementsprechend innerhalb des Schlauchs angeordnet ist.

Es versteht sich, dass ein Endlosträger als Band bzw. Schlauch auch unabhängig von den übrigen Merkmalen vorliegender Erfindung vorteilhaft als auf Stanzprodukten positionierende Anordnung zur Anwendung kommen kann, um die Transponder betriebssicher und einfach an den Stanzprodukten zu befestigen.

Vorliegende Erfindung eignet sich insbesondere für Stanzprodukte, die im Wesentlichen aus Papier oder Pappe, bzw. Wellpappe, gebildet sind. Die vorliegende Erfindung ermöglicht es, derartige Stanzprodukte kostengünstig mit Transpondern zu versehen, sodass diese insbesondere auch als Wegwerfartikel oder für eine Einmalanwendung, insbesondere auch für verhältnismäßig niederpreisige Produkte, zur Anwendung kommen können.

Auch eignet sich vorliegende Erfindung insbesondere für Verbundsysteme, wie beispielsweise Gipskarton oder Kunststofflaminate, in welche die entsprechenden Transponder ohne weiteres, beispielsweise auch durch eine Injektion, eingebracht werden können. Auch eignet sich vorliegende Erfindung insbesondere für Stanzprodukte aus Kunststoff, in welchen bereits Hohlräume vorhanden sind.

Als Transponder können insbesondere an sich bekannte RFIDs zur Anwendung kommen, die in der Regel über eine elektromagnetische Schnittstelle bzw. über eine Funkschnittstelle verfügen. Alternativ werden Transponder mit einer Infrarotschnittstelle vorgeschlagen, die insbesondere in Kombination mit der Verwendung von Stanzprodukten aus Papier oder Pappe vorteilhaft zur Anwendung kommen können, da Infrarot bei einer geeigneten Frequenzwahl eine ausreichende Eindringtiefe in derartige Werkstoffe aufweist, sodass diesbezüglich eine die Umgebung wenig belastende Kommunikation des Transponders mit entsprechenden Geräten möglich ist. Insoweit versteht es sich, dass ein Transponder mit einer Infrarotschnittstelle, welcher auf Stanzprodukte, die im Wesentlichen aus Papier oder Pappe bestehen, angebracht ist, auch unabhängig von den übrigen Merkmalen vorliegender Erfindung vorteilhaft ist.

Weitere Vorteile, Ziele und Eigenschaften vorliegender Erfindung werden nachfolgend anhand der Beschreibung anliegender Zeichnung erläutert, in welcher Ausführungsbeispiele der vorliegenden Erfindung beispielhaft dargestellt sind. Es zeigen:
- Figur 1: eine schematische Seitenansicht einer Herstellungsanlage für erfindungsgemäße Stanzprodukte;
- Figur 2: einen schematischen Produktionsablauf für eine weitere Ausführungsform;
- Figur 3: ein erstes Beispiel eines Endlosträgers für Transponder;
- Figur 4: ein zweites Beispiel eines Endlosträgers für Transponder;
- Figur 5: eine erste Materialbahn mit exemplarischen Stanzprodukten und aufgebrachten Transpondern;
- Figur 6: eine zweite Materialbahn mit exemplarischen Stanzprodukten und aufgebrachten Transpondern;
- Figur 7: schematisch einen Aufdruck eines Transponders auf eine Materialbahn;
- Figur 8: schematisch einen Injektionsdruck eines Transponders in eines Materialbahn; und
- Figur 9: die Injektion eines Transponders in einen Hohlraum einer Materialbahn.

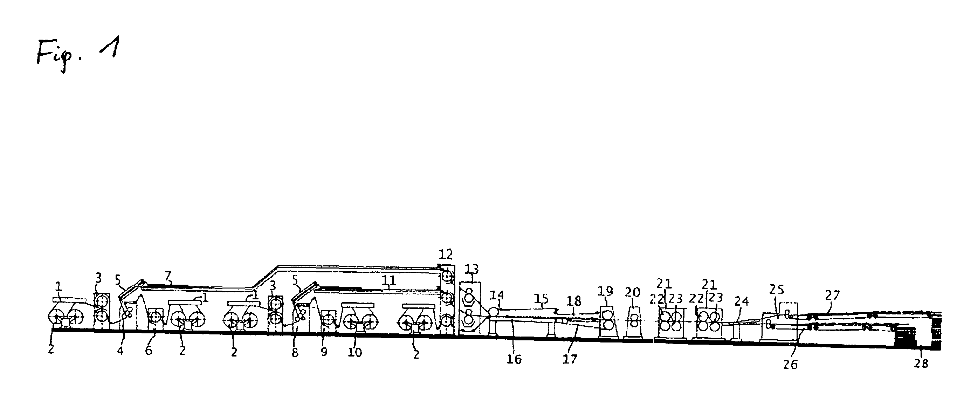

Bei der in Figur 1 dargestellten Herstellungsanlage werden über verschiedene Splicer 1 (exemplarisch beziffert) endlose Materialbahnen bereitgestellt, indem Material von entsprechenden Rollen 2 in den Splicern 1 aneinandergefügt wird. Bei der vorliegenden Herstellungsanlage werden bei vollständiger Auslastung zwei Wellen mit drei Deckblättern zu einer Wellpappe bearbeitet, wobei nach einer Vorbereitung 3 bzw. 6 in einer Zusammenführung 4 eine erste Welle mit einem ersten äußeren Deckblatt versehen und nach einer Vorbereitung 3 bzw. 9 die zweite Welle mit einem mittleren Deckblatt in einer Zusammenführung 8 bereitgestellt werden. Die beiden auf diese Weise vorbereiteten Wellen werden mittels Überführungsbrücken 7 bzw. 11 einer Zusammenführung zugeführt, in welcher zusätzlich noch das zweite äußere Deckblatt eingeführt wird. Die drei auf diese Weise bereitgestellten Bahnen werden zunächst in einem Vorbereiter 12 vorbereitet und einem Auftragswerk 13 zugeführt, in welchem ein entsprechender Leimauftrag erfolgt, bevor die drei Bahnen in einer Zusammenführungseinheit, welche in eine Heizpartie 15 mit Heizplatten 16 sowie in eine Zugpartie 18 mündet, zusammengeführt werden. Die Zugpartie 18 weist zum Ziehen der dann fünflagigen Materialbahn aus den beiden Wellen und den drei Deckbahnen einen Obergurt 14 und einen Untergurt 17 auf, wobei sich der Obergurt 14 bis in die Heizpartie erstreckt, um auch im Bereich der Heizplatten 16 einen sicheren Transport der Materialbahnen zu gewährleisten.

Die Materialbahn durchläuft dann noch zwei Anordnungen aus Rillern 21, Messern 22 und Paddelsteuerung 23, wie dieses an sich aus dem Stand der Technik bekannt ist. Nach einer Sortierung 25 werden die durch die Messer 22 bereitgestellten Stanzprodukte auf Ablageplatten 28 abgelegt.

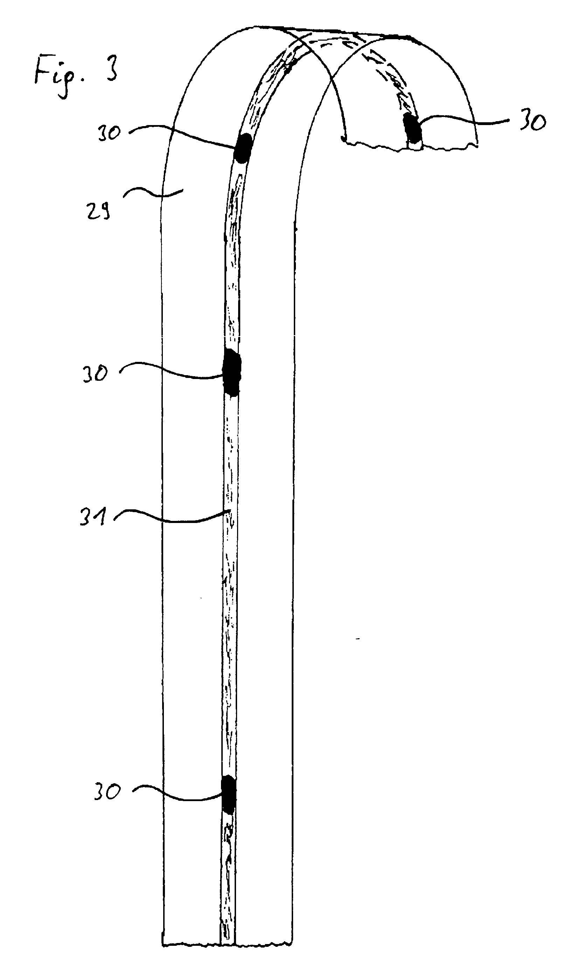

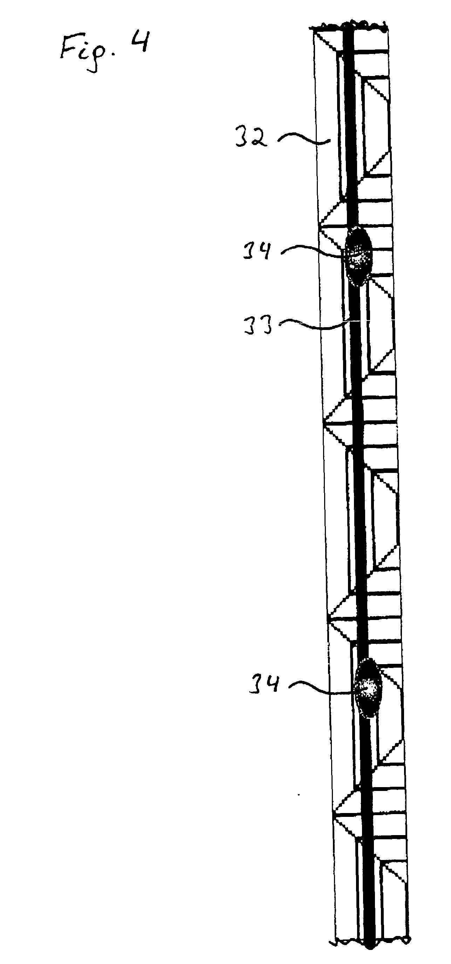

Neben dieser an sich bekannten Ausgestaltung einer Herstellungsanlage für Stanzprodukte ist an der Bahnabrollung 10 bzw. dem zugehörigen Splicer eine Transponder-Zuführung vorgesehen. Der entsprechende Vorbereiter 9 ist darüber hinaus mit einem Transponder-Vorprüfer versehen, über welchen die zugeführten Transponder einer Eingangskontrolle unterzogen werden. Bei diesem Ausführungsbeispiel werden Endlosträger zugeführt, wie sie beispielsweise in Figuren 3 und 4 abgebildet sind.

Hierbei handelt es sich bei dem in Figur 3 dargestellten Endlosband 29 um ein Kunststoffklebeband, auf welchem in regelmäßigen Abständen Transponder 30 aufgeklebt sind. Die Transponder 30 sind jeweils mit Antennen (nicht dargestellt) versehen, die in eine flexible Kunststoffbahn 31 eingebettet sind. Bei diesem Ausführungsbeispiel kann alternativ eine durchgehende Antenne, an welcher sämtliche Transponder angeschlossen sind, zur Anwendung kommen. Es versteht sich, dass statt eines Kunststoffbandes auch ein Gewebeband oder Ähnliches zur Anwendung kommen kann.

Der Endlosträger 32 nach Figur 4 ist ein Gewebeschlauch (Figur 4 ist eine Schnittdarstellung), innerhalb welchen eine durchgehende Antenne 33 angeordnet ist, an welcher in regelmäßigen Abständen Transponder 34 angebracht sind. Durch den Schlauch 32 sind die Transponder 34 zuverlässig gegen äußere Einflüsse geschützt.

Die auf diese Weise vorbereiteten Materialbahnen werden nach der Zugpartie 18 einer Transponder-Prüfung 19 und einer Transponder-Programmierung 20 zugeführt. Hier werden einerseits defekte RFIDs bzw. Transponder als defekt erkannt und für eine spätere Aussortierung vorgemerkt. Des Weiteren werden überzählige Transponder inaktiviert sowie pro zu erzeugendes Stanzprodukt jeweils ein Transponder in der gewünschten Weise programmiert.

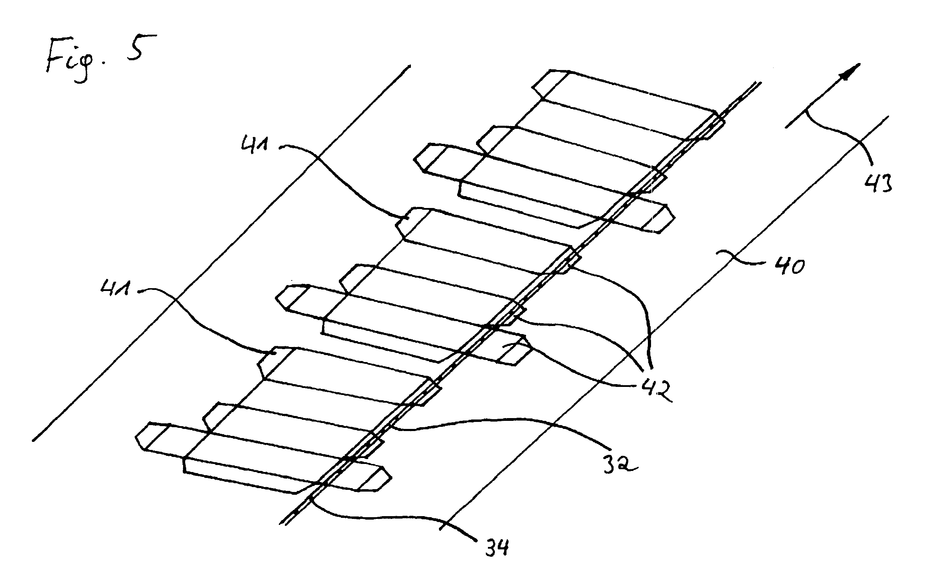

Figur 5 zeigt zur Verdeutlichung eine Materialbahn 40 mit einer Vielzahl gleichartiger Stanzprodukte 41 bevor die Stanzprodukte 41 von der übrigen Materialbahn 40 getrennt werden. Es versteht sich, dass je nach konkreter Ausgestaltung der Erfindung die Stanzprodukte 41 unmittel nach dem Stanzen oder Rillen von der übrigen Materialbahn 40 getrennt werden können, so dass eine derartige Darstellung dann fiktiv ist.

Wie aus Figur 5 ersichtlich, ist bei diesem Ausführungsbeispiel der Schlauch 32 (Ausführungsbeispiel nach Figur 4) derart angeordnet, dass er untere Laschen 42 der Stanzprodukte 41 überdeckt, wobei die Dichte der Transponder 34 derart gewählt ist, dass je Stanzprodukt 41 wenigstens ein Transponder 34 auf einer Lasche 42 eines Stanzproduktes zu liegen kommt. Wie ersichtlich entspricht die Taktung der Transponder 34 nicht der Taktung der Stanzprodukte 41.

Bei der Transponder-Programmierung 20 werden dann überzählige Transponder 34 inaktiviert, sodass je Stanzprodukt 41 lediglich ein Transponder aktiv ist.

Wie unmittelbar ersichtlich, sind die Transponder 34 beim Zusammenfalten der Stanzprodukte 41 durch den Uberlapp der Laschen geschützt. Darüber hinaus deckt der Schlauch 32 die Transponder 34 zusätzlich ab, was - je nach konkreter Umsetzung - nicht zwingend notwendig ist. Es versteht sich darüber hinaus, dass der Schlauch 32 nicht zwingend über die Laschen verlaufen muss, er kann auch beispielsweise mittig vorgesehen sein. Ebenso kann statt des Schlauchs 42 auch ein Endlosband oder ähnliches zur Anwendung kommen.

Je nach konkretem Stanzprodukt 41 kann es notwendig sein, die Lage des Schlauchs 34 senkrecht zur Maschinenlaufrichtung 43 anzupassen, um die Transponder 34 geeignet zu positionieren.

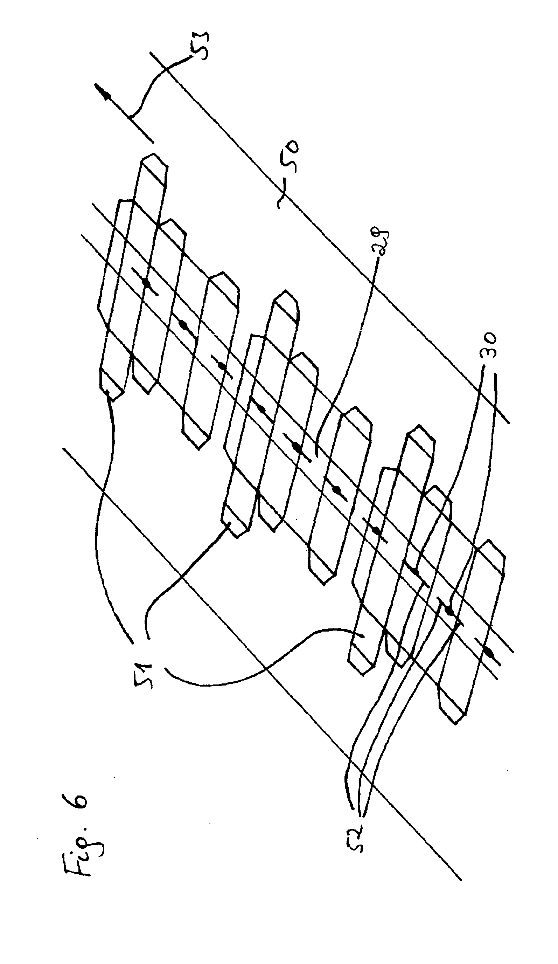

Eine mögliche Alternative, bei welcher ein Endlosträger 29 (Ausführungsbeispiel nach Figur 3) genutzt wird, zeigt das Ausführungsbeispiel nach Figur 6. Bei diesem Ausführungsbeispiel sind auf einer Materialbahn 50 Transponder 30 mit Antennen 52 irregulär zu Stanzprodukten 51 angeordnet. Auch bei diesem Ausführungsbeispiel sind somit die Transponder 30 bezüglich der Stanzprodukte 51 in Maschinenrichtung 53 irregulär positioniert.

In einer alternativen Ausführungsform hierzu können unabhängig von der Taktung entsprechender Stanzprodukte 51 Transponder direkt auf den jeweiligen Materialbahnen angebracht werden, wobei diese dann beispielsweise in das Papier der Materialbahn 50 eingebettet und die Antennen nachträglich in die Materialbahn 50 mittels metallischer Tinte oder ähnlichem injiziert werden. Statt eines Einbettens in die Materialbahn kann auch ein sonstiges Aufbringen, beispielsweise ein Aufdrucken, ein Aufkleben oder ein Aufbringen mittels eines Etikettes, dementsprechend zur Anwendung kommen. Auch bei derartigen Ausführungsformen sind somit die Transponder bezüglich der Stanzprodukte in Maschinenrichtung irregulär positioniert.

Ohne weiteres können überzählige Transponder auf einem Stanzprodukt jeweils inaktiviert werden, wobei dieses teilweise schon beim Ausstanzen geschieht, wenn die Antennen oder die Transponder selbst zerstört bzw. beschädigt werden. Nach der Prüfung 19 und der Inaktivierung bzw. Programmierung 20 werden die Stanzprodukte einer Transponder-Sortierkennung 24 zugeführt (siehe Figur 1), so dass nach einer mechanischen Sortierung 25, in welcher auf herkömmliche Weise beispielsweise Fehlprodukte aussortiert werden, diese einer Transponder abhängigen Sortierung 26, 27 zugeführt werden können, in welcher eine Sortierung nach den in den Transpondern befindlichen und in der Sortierkennung 24 ermittelten Daten erfolgt.

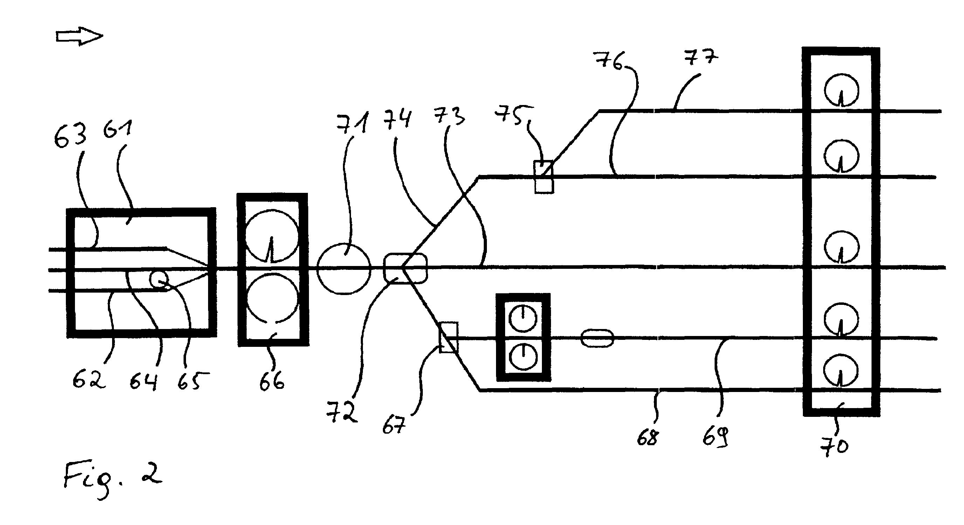

Die in Figur 2 schematisch dargestellte Herstellungsanlage zeigt exemplarisch eine Verbundmaterialzusammenführungseinheit 61, in welcher eine drei-komponentige Wellpappe aus zwei Deckblättern 62, 63 und einer Welle 64 zusammengeführt wird. Statt der Deckblätter 2, 3 könnten auch weitere Wellen mit Deckblättern zugeführt werden, um mehrlagige Wellpappen bereitzustellen. Darüber hinaus können auch andere Verbundmaterialien bzw. Pappen oder ähnliches an dieser Stelle vorbereitet werden.

Vor der Materialzusammenführung werden Transponder irregulär bzw. in der vorstehend beschriebenen Weise in einer Transponder-Zuführungseinheit 65 in das Verbundmaterial eingebracht. Anschließend erfolgt ein entsprechender Produktzuschnitt 66.

Der in Figur 2 exemplarisch dargestellte Anlagenaufbau realisiert die Umsetzung einer herkömmlichen Anlage, die eine Standartproduktionssteuerung 67, welche zwischen Standartprodukten oder Ausschuss 68 einerseits und mit Etiketten versehene Produkten 69 andererseits unterscheidet, aufweist, mit der Fähigkeit mit Produkten umzugehen, die mit Datenträgern versehen sind, wobei über entsprechende Kennzeichnungsstationen 70 betriebssicher gewährleistet werden kann, dass die jeweiligen Produkte entsprechend gekennzeichnet sind.

Insoweit reicht es aus, in einen bereits vorhandenen, konventionellen Produktionsstrang G1, 66, 67, 68 und 69 die bereits beschriebene Zuführungseinheit 65 sowie eine Datenträger-Prüfungseinheit 71 und eine Produktsteuerung 72 einzubringen, welche Produkte ohne Datenträger bzw. mit defekten Datenträgern dem konventionellen Strang 67, 68, 69 zuführt, während Produkte mit Datenträgern bzw. mit funktionstüchtigen Datenträgern beispielsweise einerseits in einen Produktstrang 73 für Datenträger mit fester Programmierung (read only) und andererseits in einen Produktstrang 74 mit programmierbaren Datenträgern aufgeteilt werden. In letzteren Produktstrang 74 können dann eine oder mehrere logische Produlctsteuerungen 75 vorgesehen sein, über welche nach dem in den Datenträgern vorhandenen Einstellungen bzw. Vorbedingungen weitere Produktstränge 76, 77 (lediglich beispielhaft dargestellt) angesteuert werden. Durch die nachfolgenden Kennzeichnungseinheiten 70 ist dann sichergestellt, dass die Produkte auch äußerlich entsprechend gekennzeichnet sind.

Auf diese Weise lässt sich das erfindungsgemäße Verfahren mit einem minimalen Aufwand bei höchstmöglicher Betriebssicherheit in eine bestehende Anlage integrieren.

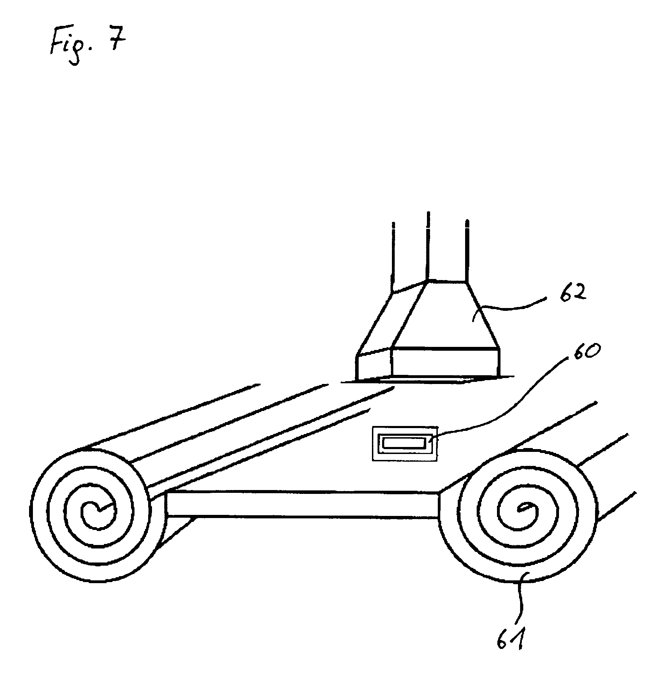

Entsprechend einer alternativen Ausführungsform kann der Transponder auch auf eine Materialbahn aufgedruckt werden, dieses ist exemplarisch in Figur 7 dargestellt. Hierbei wird ein Transponder 60 auf eine Materialbahn 61 mittels eines Druckers 62 unmittelbar aufgedruckt. Hierbei kann die Materialbahn 61 einerseits das Grundmaterial für das Stanzprodukt oder eine dessen Grundkomponenten, wie beispielsweise das Deckblatt einer Wellpappe, sein. Ebenso kann die Materialbahn andererseits beispielsweise auch ein Klebeband oder ein Aufreißstreifen sein. Je nach Beschaffenheit der Materialbahn, welche in Figur 7 lediglich schematisch dargestellt und bei diesem Ausführungsbeispiel nach dem Druck jeweils in aufgerolltem Zustand vorliegt, jedoch nach konkreter Ausführungsform auch unmittelbar nach dem Druck weiterverarbeitet werden kann, kann der Chip auch mittels der Druckeinrichtung auf die Materialbahn aufgelegt und von dieser an derselben befestigt werden, während gleichzeitig die Antennen von der Druckeinrichtung 62 gedruckt werden. Andererseits ist es auch möglich, insbesondere wenn die Materialbahn 61 eine verhältnismäßig glatte Oberfläche aufweist, die Logik des Chips selbst aufzudrucken. Wie unmittelbar ersichtlich kann der Druck nahezu zu jedem beliebigen Verfahrenszeitpunkt während der Verarbeitung der Materialbahn 61 bzw. der entsprechenden Stanzprodukte erfolgen. Insbesondere vor einem Stanzen kann es vorteilhaft sein, wenn der Druck unabhängig von der Taktung, mit welcher dann die Stanzprodukte aus der Materialbahn herausgestanzt werden, auf die Materialbahn 61 aufgebracht wird. Ebenso versteht es sich, dass der Druck mit dieser Taktung erfolgen kann, was insbesondere auch für einen Druck, der erst nach der Stanzung vorgenommen wird, gilt.

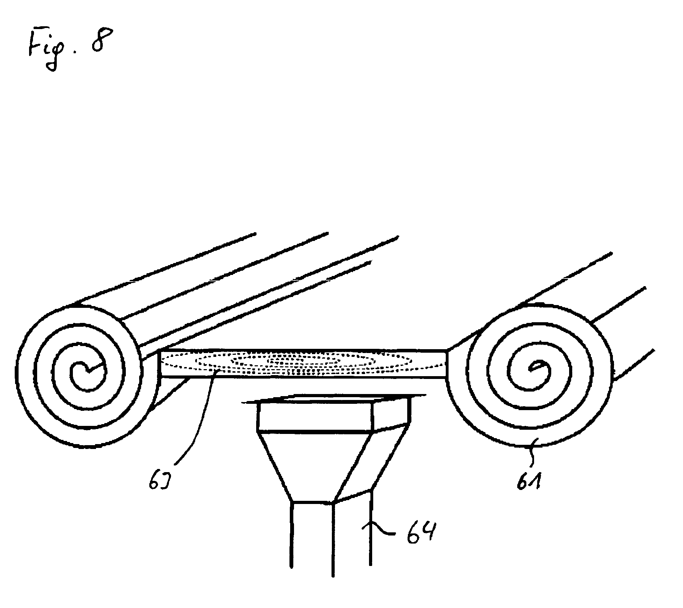

Statt eines Druckes kann der Transponder auch in die Materialbahn 61 injiziert werden, wie beispielsweise in Figur 8 dargestellt. Bei diesem schematisch skizzierten Ausführungsbeispiel werden die Antennen des Transponders 63 (schematisch angedeutet) mittels Nadeln eines Injektors 64 über eine Vielzahl von Injektionen, mit welchen eine geeignete Tinte oder ein anderes leitfähiges Material in die Materialbahn 61 eingebracht und geeignet verteilt wird, in die Materialbahn 61 gespritzt, ähnlich wie bei einem Tätowieren. Auch der Chip wird mittels einer Hohlnadel in die Materialbahn 61 eingebracht. Hierbei verbleiben, wie unmittelbar ersichtlich, entsprechende Durchtrittsstellen in der Oberfläche der Materialbahn 61, die jedoch bei geeigneter Wahl der Nadelstärken nicht auffallen und sich nahezu zur Gänze wieder verschließen, wenn die jeweiligen Nadeln die Materialbahn 61 wieder verlassen.

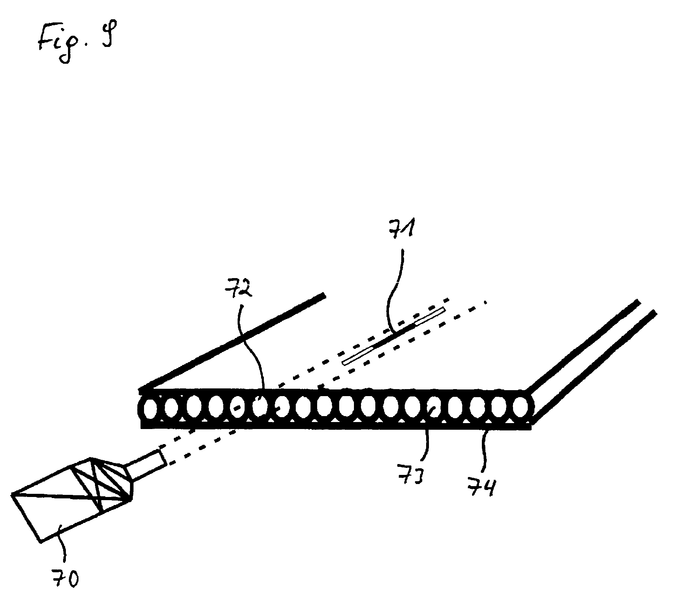

Ein Beispiel für eine zerstörungsfreie Injektion ist in Figur 9 schematisch dargestellt. Hierbei injiziert ein Injektor 70 einen Transponder 71, der bei diesem Ausführungsbeispiel zwei lineare Antennen aufweist und in sich im Wesentlichen linear ausgebildet ist, in einen Hohlraum 72 einer viele Hohlräume 73 (exemplarisch beziffert) aufweisenden Materialbahn 74. Wie unmittelbar ersichtlich, kann dieses einerseits während der Herstellung dieser Materialbahn 74 an nahezu beliebiger Stelle und andererseits auch nach dem Stanzvorgang erst bei einem entsprechenden Stanzprodukt geschehen. Bei diesem Ausführungsbeispiel handelt es sich um eine Materialbahn aus Kunststoff, welche regelmäßig angeordnete Röhren 73, die je nach konkreter Ausführungsform rund oder eckig sein können, sowie zwei ebene Decklagen jeweils an den beiden Oberflächenseiten aufweist. Es versteht sich, dass anstatt einer derartigen Anordnung beispielsweise auch die Hohlräume einer Wellpappe ohne weiteres dementsprechend genutzt werden können.

Der Injektor 70 umfasst vorzugsweise ein Magazin (nicht explizit dargestellt) mit einer Vielzahl von Transpondern, so dass die Transponder mit einer sehr hohen Geschwindigkeit injiziert werden können.

Vorzugsweise sind bei diesem Ausführungsbeispiel auch Mittel zum Befestigen des Transponders 71 in dem Hohlraum 72 vorgesehen. Derartige Mittel können beispielsweise Mittel zum Aufbringen bzw. Einführen von Klebstoff sein. Ebenso kann der Injektor eine Hohlnadel aufweisen, welche den Hohlraum 72 aufweitet, so dass sich dieser wieder zusammenzieht, wenn der Transponder 71 injiziert ist und die Hohlnadel wieder entfernt wird. Auf diese Weise kann der Transponder 71 durch die Eigenspannung des Materials der Materialbahn 74 fixiert werden. Ebenso ist es denkbar, den Transponder 71 größer als den Hohlraum 72 auszubilden, so dass dieser beim Injizieren in den Hohlraum 72 diesen weitet und aufgrund der Materialspannung dann in dem Hohlraum 72 gehalten wird.

Des Weiteren ist es vorteilhaft, wenn der Injektor 70 Mittel zum Auffinden oder Mittel zum Bereitstellen eines Hohlraumes in der Materialbahn 74 aufweist. Zum Auffinden können einerseits optische Sensoren genutzt werden. Andererseits kann das Auffinden auch mittels einer geeigneten Führungsnadel erfolgen, welche in einen bereits vorhandenen Hohlraum eindringt und welcher dann der eigentliche Injektor folgen kann. Statt einer separaten Führungsnadel kann beispielsweise auch eine abgeschrägte Nadelspitze einer Injektionsnadel dementsprechend als Führung dienen. Es versteht sich, dass auch andere taktile oder berührungslose Sensoren zum Auffinden der jeweiligen Hohlräume dienen können, um sicher zu stellen, dass der Injektor 70 den jeweiligen Transponder 71 betriebssicher in dem jeweiligen Hohlraum 72 positioniert. Insbesondere bei solideren Materialbahnen können jedoch auch Mittel zum Bereitstellen eines Hohlraumes vorgesehen sein. Dieses können beispielsweise eine Stanzvorrichtung, welche einen Hohlraum aus der Materialbahn herausstanzt, oder eine Aufweitnadel oder -ahle, welche einen Hohlraum mittels einer Materialverdrängung erzeugt, sein. Das Bereitstellen eines Hohlraums ist insbesondere bei dickwandigeren Kartonagen von Vorteil.

Es versteht sich, dass die einzelnen Merkmale des vorgenannten Injektors, wie das Magazin, die Befestigungsmittel sowie die Mittel zum Auffinden bzw. Bereitstellen eines Hohlraums auch unabhängig von den übrigen Merkmalen vorliegender Erfindung vorteilhaft sind.

## Patentansprüche

1. Mit wenigstens einem Transponder versehenes Stanzprodukt, **dadurch gekennzeichnet, dass** der Transponder auf einem Träger angeordnet ist, der kleiner als das Stanzprodukt ist und an zwei Seiten bis zu einer Umrandung des Stanzproduktes reicht.

2. Stanzprodukt nach Anspruch 1, **gekennzeichnet durch** wenigstens einen weiteren Transponder auf dem Träger.

3. Mit wenigstens einem Transponder versehenes Stanzprodukt, **gekennzeichnet durch** wenigstens einen weiteren Transponder auf dem Stanzprodukt.

4. Stanzprodukt nach Anspruch 3, **dadurch gekennzeichnet, dass** die Transponder auf einem Träger angeordnet sind.

5. Stanzprodukt nach einem der Ansprüche 2 bis 4, **dadurch gekennzeichnet, dass** der weitere Transponder inaktiviert ist.

6. Stanzprodukt nach Anspruch 5, **dadurch gekennzeichnet, dass** der weitere Transponder irreversibel inaktiviert ist.

7. Stanzprodukt nach einem der Ansprüche 1 bis 6, **dadurch gekennzeichnet, dass** zumindest eine Baugruppe des Transponders aufgedruckt ist.

8. Stanzprodukt nach Anspruch 7, **dadurch gekennzeichnet, dass** die Antenne des Transponders aufgedruckt ist.

9. Stanzprodukt nach Anspruch 7 oder 8, **dadurch gekennzeichnet, dass** ein Chip des Transponders aufgedruckt ist.

10. Stanzprodukt nach Anspruch 9, **dadurch gekennzeichnet, dass** der Chip als Ganzes mittels eines Druckverfahrens appliziert sind.

11. Stanzprodukt nach Anspruch 9, **dadurch gekennzeichnet, dass** die logischen Schaltungen des Chips gedruckt sind.

12. Stanzprodukt nach einem der Ansprüche 1 bis 11, **dadurch gekennzeichnet, dass** zumindest eine Baugruppe des Transponders in das Stanzprodukt injiziert ist.

13. Stanzprodukt nach Anspruch 12, **dadurch gekennzeichnet, dass** die Antenne des Transponders in das Stanzprodukt injiziert ist.

14. Stanzprodukt nach Anspruch 12 oder 13, **dadurch gekennzeichnet, dass** ein Chip des Transponders in das Stanzprodukt injiziert ist.

15. Stanzprodukt nach Anspruch 14, **dadurch gekennzeichnet, dass** der Chip als Ganzes in das Stanzprodukt injiziert ist.

16. Stanzprodukt nach Anspruch 14, **dadurch gekennzeichnet, dass** die logischen Schaltungen des Chips in das Stanzprodukt injiziert sind.

17. Stanzprodukt nach einem der Ansprüche 12 bis 16, **dadurch gekennzeichnet, dass** für die Injektion zumindest eine Schicht oder Lage des Stanzproduktes durchdrungen wurde.

18. Stanzprodukt nach einem der Ansprüche 12 bis 17, **dadurch gekennzeichnet, dass** die Injektion in einen Wellenberg bzw. in ein Wellental des Stanzproduktes erfolgt ist.

19. Stanzprodukt nach einem der Ansprüche 7 bis 18, **dadurch gekennzeichnet, dass** die zumindest eine Baugruppe des Transponders leitfähige Polymere und/oder metallische Tinte aufweist.

20. Stanzprodukt nach einem der Ansprüche 1 bis 19, **dadurch gekennzeichnet, dass** das Stanzprodukt Hohlräume, wie beispielsweise Wellenberge oder -täler einer Wellpappe, aufweist und dass in wenigstens einem der Hohlräume der Transponder eingeschoben ist

21. Stanzprodukt nach Anspruch 20, **dadurch gekennzeichnet, dass** sich dieser Hohlraum bis zu einem Rand des Stanzproduktes öffnet.

22. Stanzprodukt nach Anspruch 20 oder 21, **dadurch gekennzeichnet, dass** der Transponder mit zumindest zwei Komponenten des Stanzproduktes verbunden ist.

23. Stanzprodukt nach einem der Ansprüche 20 bis 22, **dadurch gekennzeichnet, dass** der Transponder unter einer Vorspannung des Stanzproduktes mit diesem verbunden ist.

24. Stanzprodukt nach einem der Ansprüche 1 bis 23, **dadurch gekennzeichnet, dass** das Stanzprodukt eine Wegwerfverpackung ist und der Transponder einen Sensor zum Erfassen von Umgebungsdaten zu der Wegwerfverpackung umfasst.

25. Vielzahl gleichartiger Stanzprodukte, vorzugsweise nach einem der Ansprüche 1 bis 24, die jeweils mit wenigstens einem Transponder versehen sind, **dadurch gekennzeichnet, dass** die Transponder der Vielzahl gleichartiger Stanzprodukte irregulär auf den Stanzprodukten positioniert sind.

26. Verfahren zum Versehen einer Vielzahl von Stanzprodukten mit jeweils zumindest einem Transponder, **dadurch gekennzeichnet, dass** der Transponder auf einem Endlosträger bereitgestellt wird, der an die Stanzprodukte bzw. an Vorstufen der Stanzprodukte appliziert wird.

27. Verfahren zum Versehen einer Vielzahl von Stanzprodukten mit jeweils zumindest einem Transponder, **dadurch gekennzeichnet, dass** die Transponder irregulär in Bezug auf den Stanzvorgang an die Stanzprodukte bzw. an Vorstufen der Stanzprodukte oder an einem Endlosträger, der auf die Stanzprodukte bzw. auf Vorstufen der Stanzprodukte appliziert wird, appliziert werden.

28. Verfahren nach Anspruch 26 oder 27, **dadurch gekennzeichnet, dass** zumindest eine Baugruppe der Transponder auf die Stanzprodukte bzw. auf Vorstufen der Stanzprodukte oder auf einen Endlosträger, der auf die Stanzprodukte bzw. auf Vorstufen der Stanzprodukte appliziert wird, in flüssiger Form angebracht wird.

29. Verfahren nach Anspruch 28, **dadurch gekennzeichnet, dass** die zumindest eine Baugruppe des Transponders angespritzt wird.

30. Verfahren nach Anspruch 29, **dadurch gekennzeichnet, dass** die zumindest eine Baugruppe des Transponders injiziert wird.

31. Verfahren nach Anspruch 28, **dadurch gekennzeichnet, dass** die zumindest eine Baugruppe des Transponders aufgedruckt wird.

32. Verfahren nach einem der Ansprüche 28 bis 31, **dadurch gekennzeichnet, dass** das in flüssiger Form angebrachte Material eine leitfähige Flüssigkeit, wie eine leitfähige Polymere enthaltende Paste, umfasst.

33. Verfahren nach einem der Ansprüche 26 bis 32, **dadurch gekennzeichnet, dass** die Transponder mit der Taktung der Stanzprodukte an den Stanzprodukten bzw. an den Vorstufen der Stanzprodukte angebracht werden.

34. Verfahren nach einem der Ansprüche 26 bis 32, **dadurch gekennzeichnet, dass** die Transponder unabhängig von der Taktung der Stanzprodukte an den Stanzprodukten bzw. an den Vorstufen der Stanzprodukte angebracht werden.

35. Verfahren nach einem der Ansprüche 26 bis 34, **dadurch gekennzeichnet, dass** mehrere Transponder auf wenigstens einem Stanzprodukt angebracht werden und dass anschließend wenigstens einer dieser Transponder inaktiviert wird, so dass wenigstens ein aktiver Transponder an dem Stanzprodukt verbleibt.

36. Stanzprodukt, Vielzahl von Stanzprodukten bzw. Verfahren nach einem der Ansprüche 1 bis 35, **dadurch gekennzeichnet, dass** das Stanzprodukt eine Umverpackung ist und der Transponder innerhalb der Umverpackung angeordnet ist.

37. Stanzprodukt, Vielzahl von Stanzprodukten bzw. Verfahren nach Anspruch 36, **dadurch gekennzeichnet, dass** der Transponder auf einer Innenseite der Umverpackung angeordnet ist.

38. Stanzprodukt, Vielzahl von Stanzprodukten bzw. Verfahren nach einem der Ansprüche 1 bis 36, **dadurch gekennzeichnet, dass** der Transponder beidseits von Material des Stanzproduktes bedeckt ist.

39. Stanzprodukt, Vielzahl von Stanzprodukten bzw. Verfahren nach einem der Ansprüche 1 bis 37, **dadurch gekennzeichnet, dass** der Transponder von dem Träger bedeckt ist.

40. Stanzprodukt, Vielzahl von Stanzprodukten bzw. Verfahren nach einem der Ansprüche 1 bis 38, **dadurch gekennzeichnet, dass** der Träger ein Band ist.

41. Stanzprodukt, Vielzahl von Stanzprodukten bzw. Verfahren nach einem der Ansprüche 1 bis 38, **dadurch gekennzeichnet, dass** der Träger ein Schlauch ist.

42. Stanzprodukt, Vielzahl von Stanzprodukten bzw. Verfahren nach Anspruch 41, **dadurch gekennzeichnet, dass** der Transponder innerhalb des Schlauchs angeordnet ist.

43. Stanzprodukt, Vielzahl von Stanzprodukten bzw. Verfahren nach einem der Ansprüche 1 bis 42, **dadurch gekennzeichnet, dass** das Stanzprodukt im Wesentlichen aus Papier oder Pappe ist.

44. Stanzprodukt, Vielzahl von Stanzprodukten bzw. Verfahren nach einem der Ansprüche 1 bis 43, **dadurch gekennzeichnet, dass** das Stanzprodukt ein Verbundsystem, beispielsweise Gipskarton oder ein Kunststofflaminat, ist.

45. Stanzprodukt, Vielzahl von Stanzprodukten bzw. Verfahren nach einem der Ansprüche 1 bis 44, **dadurch gekennzeichnet, dass** der Transponder eine Infrarotschnittstelle aufweist.

46. Stanzprodukt, Vielzahl von Stanzprodukten bzw. Verfahren nach einem der Ansprüche 1 bis 45, **dadurch gekennzeichnet, dass** der Transponder eine Funkschnittstelle aufweist.
